# EUROPEAN PATENT APPLICATION

(11) **EP 2 314 502 A2**
(43) Date of publication of application: **27.04.2011**
(21) Application number: 10450151.5
(22) Date of filing: 04.10.2010
(51) Int. Cl.: B62J 1/06

(54) **Longitudinally adjustable assembly for a bicycle seat**

(30) Priority: 22.10.2009 TW 098219441
(71) Applicant: Hsu, Jung-Yu, Tainan (TW)
(72) Inventor: Hsu, Jung-Yu, Tainan (TW)
(74) Representative: Sonn & Partner Patentanwälte

(57) **Abstract**

A longitudinally adjustable assembly for a bicycle seat has a seat tube (10), a seat post (20) and an auxiliary hoop device (30). The seat tube (10) has multiple longitudinal grooves (111) formed in an inner surface of the seat tube (10). The seat post (20) is slidably inserted into the seat tube (10) and has multiple protrusions (212) which are formed on and protrude out from an outer surface of the seat post (20). The protrusions (212) are respectively slidably mounted in the longitudinal grooves (111). The auxiliary hoop device (30) is mounted securely with the seat tube (10) and around the seat post (20). Because the protrusions (212) are slidably mounted in the longitudinal grooves (111) and the auxiliary hoop device (30) provides a pressing force for the seat post (20), a relative rotation between the seat post (20) and the seat tube (10) can be avoided.

## Description

### 1. Field of the Invention

The present invention relates to an adjustable assembly for a bicycle seat, and more particularly to a longitudinally adjustable assembly for a bicycle seat to avoid a relative rotation between a seat post and a seat tube.

### 2. Description of Related Art

A conventional adjustable assembly for a bicycle seat has a seat tube, a seat post and a fastener. The seat post is slidably inserted into the seat tube and has a top end mounted outside the seat tube and connected to a bicycle seat. The fastener is connected with the seat post and the seat tube to secure the seat post on the seat tube. Accordingly, the seat post can be moved up or down along the seat tube to adjust a height of the bicycle seat.

However, the seat tube and the seat post respectively have a round cross sectional shape. Consequently, a relative rotation between the seat tube and the seat post happens because of a twist movement of a cyclist's buttocks.

Another conventional adjustable assembly for a bicycle seat has a seat post. The seat post has an outer surface and multiple longitudinal protrusions protruding out from the outer surface of the seat post. The longitudinal protrusions facilitate to enhance friction between the seat post and the seat tube. However, friction provided by the longitudinal protrusions is not sufficient.

To overcome the shortcomings, the present invention tends to provide a longitudinally adjustable assembly for a bicycle seat to obviate the aforementioned problems.

The main objective of the invention is to provide a longitudinally adjustable assembly for a bicycle seat to avoid a relative rotation between a seat post and a seat tube.

A longitudinally adjustable assembly for a bicycle seat has a seat tube, a seat post and an auxiliary hoop device. The seat tube has an inner surface and multiple longitudinal grooves formed in the inner surface of the seat tube. The seat post is slidably inserted into the seat tube and has an outer surface and multiple protrusions. The protrusions are formed on and protrude out from the outer surface of the seat post. The protrusions are respectively slidably mounted in the longitudinal grooves to allow the seat post to longitudinally move along the seat tube. The auxiliary hoop device is mounted securely with the seat tube and around the seat post. Because the protrusions are slidably mounted in the longitudinal grooves and the auxiliary hoop device provides a pressing force for the seat post, a relative rotation between the seat post and the seat tube can be avoided.

Other objects, advantages and novel features of the invention will become more apparent from the following detailed description when taken in conjunction with the accompanying drawings.

### IN THE DRAWINGS

Fig. 1 is a perspective of a first embodiment of a longitudinally adjustable assembly for a bicycle seat in accordance with the present invention;
Fig. 2 is a partially exploded perspective view in partial section of the longitudinally adjustable assembly for a bicycle seat in Fig. 1;
Fig. 3 is an enlarged cross sectional top view of the longitudinally adjustable assembly for a bicycle seat in Fig. 1;
Fig. 4 is a side view in partial section of the longitudinally adjustable assembly for a bicycle seat in Fig. 1;
Fig. 5 is an enlarged exploded perspective view of an auxiliary hoop device of the longitudinally adjustable assembly for a bicycle seat in Fig. 1;
Fig. 6 is an enlarged perspective view in partial section of the auxiliary hoop device in Fig. 5;
Fig. 7 is an enlarged top view in partial section of the auxiliary hoop device in Fig. 6;
Fig. 8 is an enlarged exploded perspective view of a second embodiment of an auxiliary hoop device of a longitudinally adjustable assembly for a bicycle seat in accordance with the present invention;
Fig. 9 is an enlarged perspective view in partial section of the auxiliary hoop device in Fig. 8;
Fig. 10 is an enlarged cross sectional top view of another embodiment of a longitudinally adjustable assembly for a bicycle seat in accordance with the present invention;
Fig. 11 is an enlarged exploded perspective view of a third embodiment of an auxiliary loop device of a longitudinally adjustable assembly for a bicycle seat in accordance with the present invention; and
Fig. 12 is an enlarged top view in partial section of the auxiliary hoop device in Fig. 11.

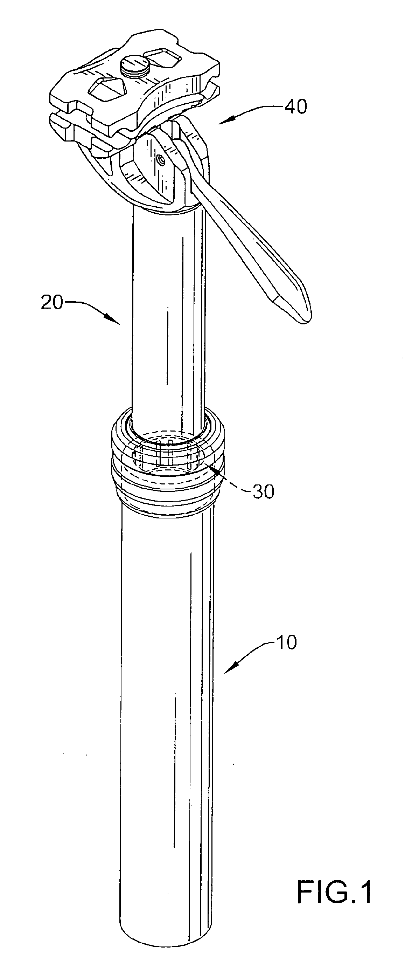

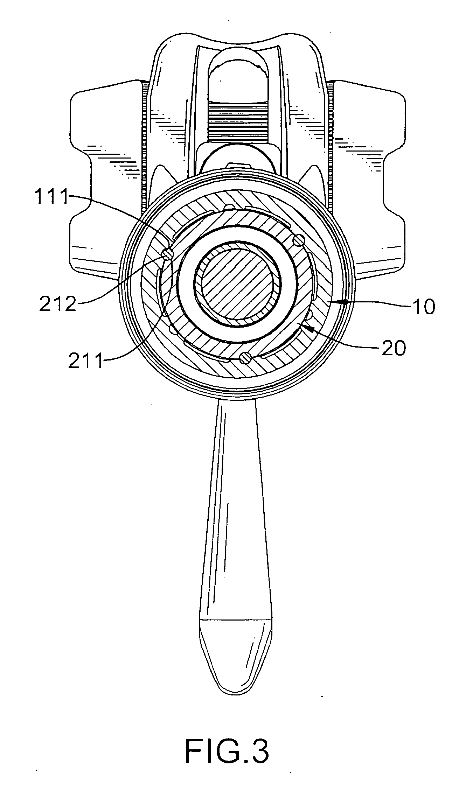

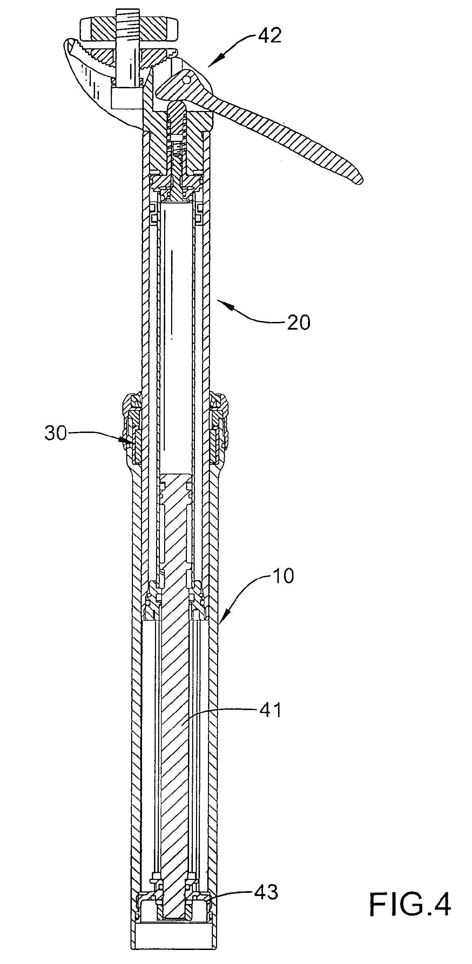

With reference to Figs. 1 to 4, a first embodiment of a longitudinally adjustable assembly for a bicycle seat in accordance with the present invention comprises a seat tube 10, a seat post 20 and an auxiliary hoop device 30.

The seat tube 10 has a top end, an inner surface and a tube connecting section 11. The tube connecting section 11 is formed on the inner surface of the seat tube 10.

The seat post 20 is slidably inserted into the seat tube 10 and has an outer surface and a post connecting section 21. The post connecting section 21 is formed on the outer surface of the seat post 20 and is connected with the tube connecting section 11 to allow the seat post 20 to longitudinally move along the seat tube 10.

Preferably, the tube connecting section 11 has multiple longitudinal grooves 111 at intervals formed in the inner surface of the seat tube 10. The post connecting section 21 has multiple protrusion recesses 211 and multiple protrusions 212. The protrusion recesses 211 are at intervals formed in the outer surface of the seat post 20. The protrusions 212 are respectively mounted securely in and protrude out from the protrusion recesses 211 and are respectively slidably mounted in the longitudinal grooves 111. Accordingly, the longitudinal grooves 111 can guide the protrusions 212 to move and avoid a relative rotation between the seat tube 10 and the seat post 20.

Preferably, the tube connecting section 11 may have a single longitudinal groove 111 and the post connecting section 21 may have a single protrusion 212. As long as the protrusion 212 is slidably mounted in the longitudinal groove 111 to avoid a relative rotation between the seat tube 10 and the seat post 20, the present invention does not limit the numbers of the longitudinal grooves 111 and the protrusions 212.

In another embodiment of the longitudinally adjustable assembly for a bicycle seat in accordance with the present invention, the tube connecting section 11 may have multiple protrusions and the post connecting section 21 may have multiple longitudinal grooves respectively connected with the protrusions.

The auxiliary hoop device 30 is mounted securely in the top end of the seat tube 10, is mounted around the seat post 20 and may be a unidirectional bearing.

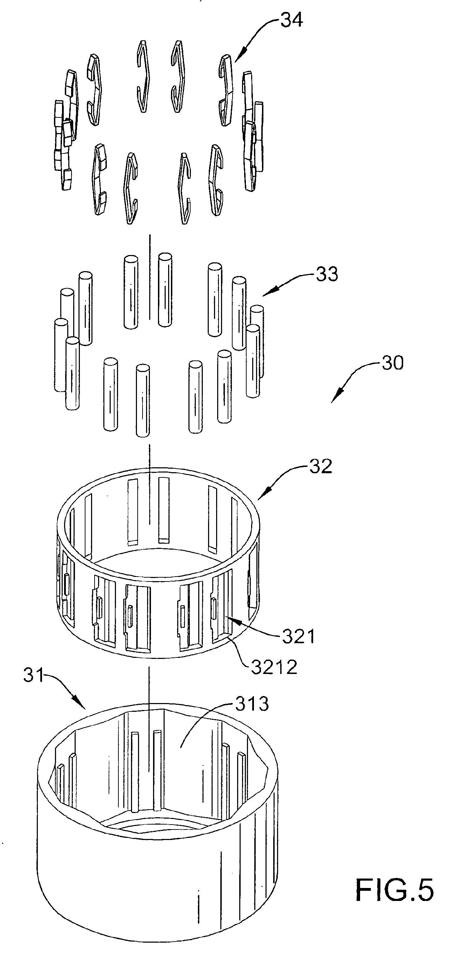

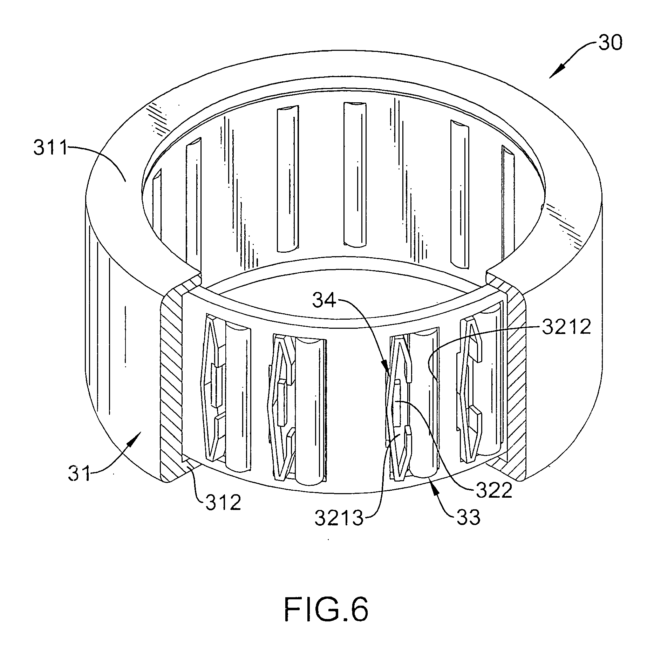

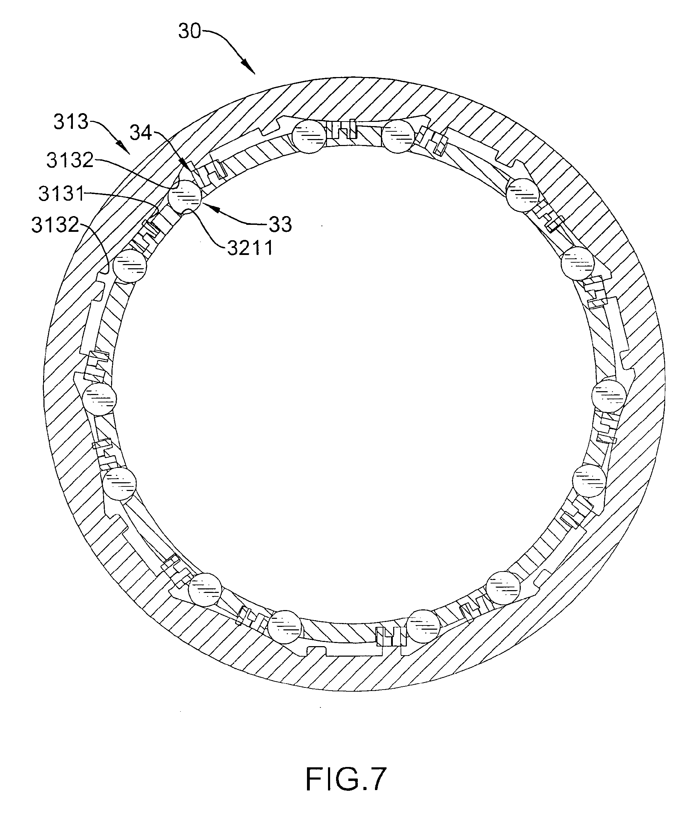

With further reference to Figs. 5 to 7, preferably, the auxiliary hoop device 30 has a housing 31, a hoop 32, multiple abutting units 33 and multiple elastomers 34. The housing 31 is mounted securely in the seat tube 10 and has an inner surface, a top edge, a bottom edge, a first flange 311, a second flange 312 and multiple abutting surfaces 313. The bottom edge of the housing 31 is opposite to the top edge of the housing 31. The first flange 311 is formed around the top edge of the housing 31 and radially protrudes inward. The second flange 312 is formed around the bottom edge of the housing 31 and radially protrudes inward. The abutting surfaces 313 are formed at the inner surface of the housing 31. A cross sectional shape of each abutting surface 313 may be flat or convex. Preferably, each abutting surface 313 is convex and has a convex section 3131 and two concave sections 3132. Each convex section 3131 is formed between the concave sections 3132 of a corresponding abutting surface 313.

The hoop 32 is mounted in the housing 31 and has a top edge, a bottom edge, an outer surface and multiple hoop recesses 321. The top edge of the hoop 32 abuts the first flange 311. The bottom edge of the hoop 32 abuts the second flange 312 to hold the hoop 32 between the first and second flanges 311,312. The hoop 32 is put in the housing 31 and then the top edge and the bottom edge of the housing 31 are respectively bent to form the first flange 311 and the second flange 312. Accordingly, the hoop 32 can be mounted in the housing 31.

The hoop recesses 321 are respectively formed radially though the outer surface of the hoop 32 at intervals. Each hoop recess 321 has an inner opening 3211 and an outer opening 3212.

The abutting units 33 are respectively mounted in the hoop recesses 321. Each abutting unit 33 has a first section, a second section and a left side. The first section of each abutting unit 33 protrudes out from a corresponding inner opening 3211 of the hoop recesses 321 and abuts the outer surface of the seat post 20. The second section of each abutting unit 33 is opposite to a corresponding first section and abuts one of the abutting surfaces 313. The abutting units 33 are rotatable but are still normally because that the second sections of the abutting units 33 respectively protrude into and abut the concave sections 3132 of the abutting surfaces 313 and are blocked by the convex sections 3131.

The elastomers 34 are respectively mounted in the outer openings 3212 of the hoop recesses 321, are respectively adjacent to the left sides of the abutting units 33 and respectively press the abutting units 33. Preferably, the elastomers 34 may be separated parts held in the outer openings 3212 or be integrally formed in the outer openings 3212. Because the elastomers 34 respectively press the abutting units 33, the elastomers 34 can provide lateral forces to the abutting units 33. If the seat post 20 is slightly rotated counterclockwise relative to the housing 31, the abutting units 33 will press respectively the elastomers 34 and rotate slightly. However, the seat post 20 is not rotated because the protrusions 212 are mounted in the longitudinal grooves 111. Therefore, pressing forces are always provided by the elastomers 34 and are applied to the abutting units 33 and the seat post 20 to let the seat post 20 still. Consequently, a relative rotation between the seat post 20 and the seat tube 10 can be further avoided.

Preferably, each outer opening 3212 of the hoop recesses 321 has a concave section 3213 encompassing a corresponding elastomer 34 and having a bottom. The hoop 32 has multiple positioning lumps 322 respectively radially protruding from the bottoms of the concave sections 3213.

Preferably, each inner opening 3211 of the hoop recesses 321 has a width. Each outer opening 3212 of the hoop recesses 321 has a width larger than that of each inner opening 3211 of the hoop recesses 321. Each abutting unit 33 is cylindrical and has a diameter larger than the width of each inner opening 3211 of the hoop recesses 321 and not larger than the width of each outer opening 3212 of the hoop recesses 321. Because the diameter of each abutting unit 33 is larger than the width of each inner opening of the hoop recesses 321, the first section of each abutting unit 33 can partially protrude out but not escape from the corresponding inner opening 3211 of the hoop recesses 321.

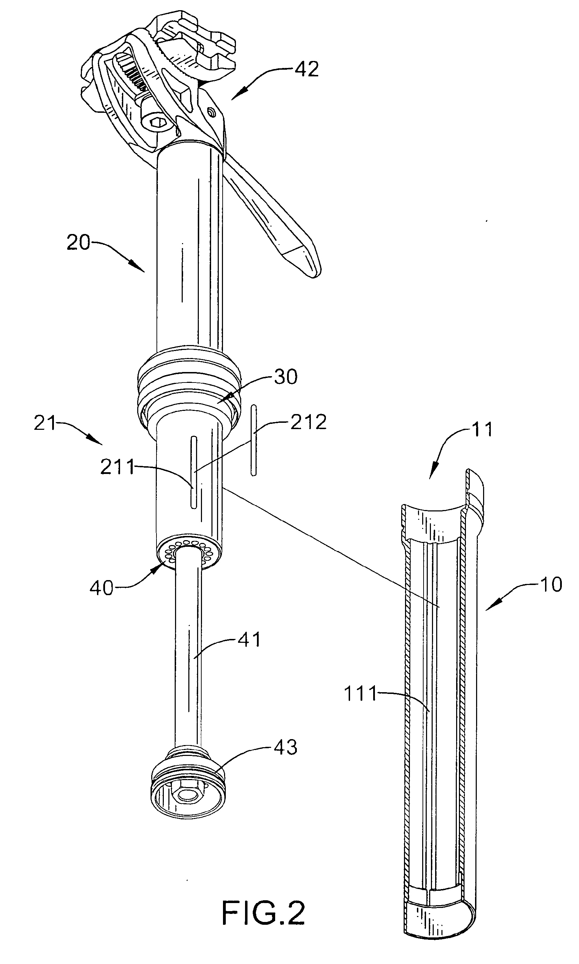

Each elastomer 34 is C-shaped, surrounds a corresponding positioning lump 322 and has two ends and a central segment. The ends of each elastomer 34 abut a corresponding abutting unit 33. The central segment of each elastomer 34 abuts a corresponding positioning lump 322.With reference to Figs. 2 to 4, preferably, the seat post 20 has a top end. The longitudinally adjustable assembly further has a rod device 40. The rod device 40 has a rod 41, a controller 42 and a fastener 43. The rod 41 is relatively slidably mounted in the seat post 20 and has a top end and a bottom end. The controller 42 is mounted securely with the top end of the seat post 20 and is connected to the top end of the rod 41. The controller 42 can control a movement of the rod 41 relative to the seat post 20. The fastener 43 is mounted securely in the seat tube 10 and is mounted securely around the bottom end of the rod 41. Accordingly, the seat post 20 can be moved up or down by the controller 42 controlling the rod 41 and a height of a bicycle seat can be adjusted. The rod device 40 may be conventional and detailed description is omitted.

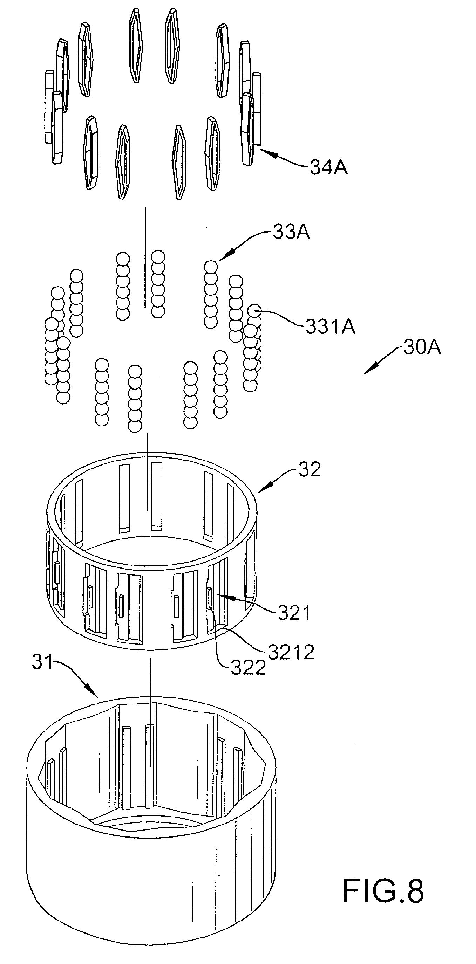

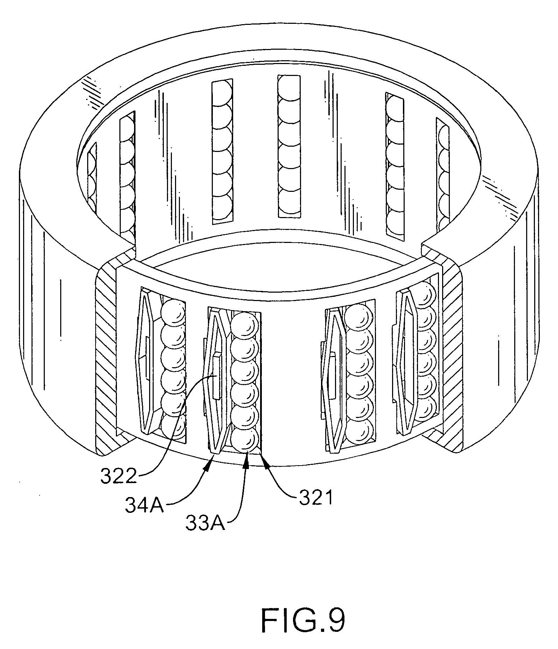

With reference to Fig. 8 and 9, a second embodiment of an auxiliary hoop device 30A of a longitudinally adjustable assembly for a bicycle seat in accordance with the present invention is substantially the same as that of the first embodiment. Each abutting unit 33A has multiple balls 331 A. The balls 331 A are arranged along a line. Each ball 331A has a diameter larger than the width of each inner opening 3211 of the hoop recesses 321. Each elastomer 34A is hooped, surrounds a corresponding positioning lump 322 and abuts a corresponding abutting unit 33A.

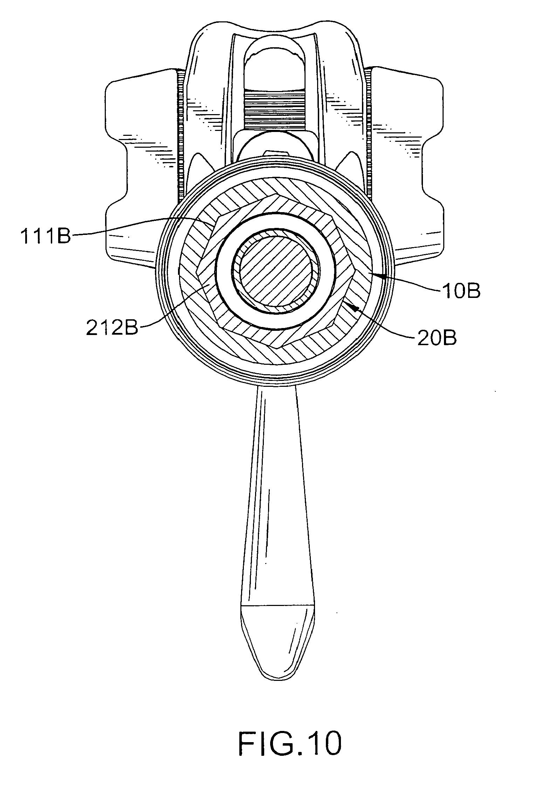

With further reference to Fig. 10, another embodiment of a longitudinally adjustable assembly for a bicycle seat in accordance with the present invention is substantially the same as that of the first embodiment. The seat tube 10B has a polygonal cross sectional shape and multiple corners. The longitudinal grooves 111B are respectively formed at the corners of the seat tube 10B. The seat post 20B has a polygonal cross sectional shape same as that of the seat tube 10B and has multiple corners. The protrusions 212B are respectively formed at the corners of the seat post 20B. Consequently, the relative rotation between the seat tube 10B and the seat post 20B can also be avoided.

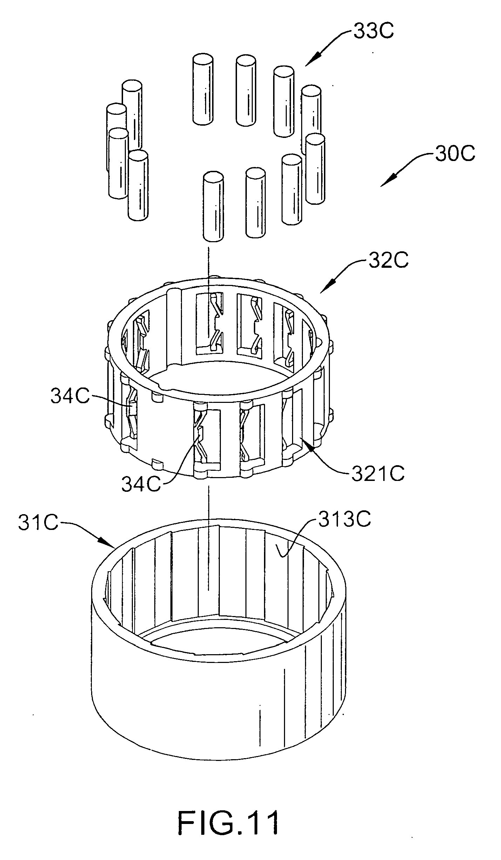

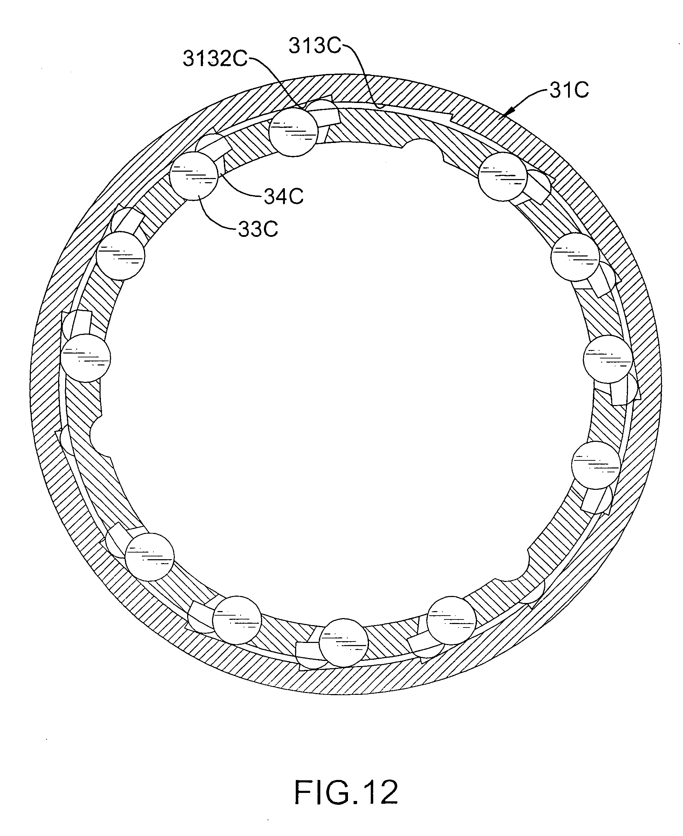

With further reference to Figs. 11 and 12, a third embodiment of a longitudinally adjustable assembly for a bicycle in accordance with the present invention is substantially the same as that of the first embodiment except that the auxiliary hoop device 30C of the third embodiment is a unidirectional bearing and has a housing 31C, a hoop 32C, multiple abutting units 33C and multiple elastomers 34C. The abutting surfaces 313C of the housing 31C incline in a same rotational direction and each abutting surface 313C has a right side and a convex section 3132C. The convex section 3132C of each abutting surface 313C is formed at the right side of the abutting surface 313C.

The hoop recesses 321C of the hoop 32C are respectively formed radially though the hoop 32C at intervals and each hoop recesses 321C has an inner side surface. The elastomers 34C are respectively formed at and protrude from the inner side surfaces of the hoop recesses 321C. The abutting units 33C are cylindrical, are respectively mounted in the hoop recesses 321C and are respectively pressed by the elastomers 34C. The hoop device 30C may be a conventional unidirectional bearing and detailed description and operational principle are omitted.

From the above description, it is noted that the present invention has the following advantage:

A relative rotation between the seat post 20,20B and the seat tube 10,10B can be avoided.

Because the protrusions 212,212B are slidably mounted in the longitudinal grooves 111,111B and the auxiliary hoop device 30,30B,30C provides a pressing force for the seat post 20,20B, the relative rotation between the seat post 20,20B and the seat tube 10,10B can be avoided.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A longitudinally adjustable assembly for a bicycle seat, **characterized in that**:
a seat tube (10) having
a top end;
an inner surface; and
a tube connecting section (11) formed on the inner surface of the seat tube (10);
a seat post (20) slidably inserted into the seat tube (10) and having
an outer surface; and
a post connecting section (21) formed on the outer surface of the seat post (20) and connected with the tube connecting section (11) to allow the seat post (20) to longitudinally move along the seat tube (10); and
an auxiliary hoop device (30,30B,30C) mounted securely in the top end of the seat tube (10) and mounted securely around the seat post (20).

2. The longitudinally adjustable assembly for a bicycle seat as claimed in claim 1, wherein the auxiliary hoop device (30) has
a housing (31) mounted securely in the seat tube (10) having
an inner surface;
a top edge;
a bottom edge opposite to the top edge of the housing;
a first flange (311) formed around the top edge of the housing (31) and radially protruding inward; and
a second flange (312) formed around the bottom edge of the housing (31) and radially protruding inward;
multiple abutting surfaces (313) formed at the inner surface of the housing (31), each abutting surface (313) having two concave sections (3132) and a convex section (3131) which is formed between the concave sections (3132);
a hoop (32) mounted in the housing (31) and having
a top edge abutting the first flange (311);
a bottom edge abutting the second flange (312);
an outer surface;
multiple hoop recesses (321) respectively formed radially though the outer surface of the hoop (32) at intervals, each hoop recess (321) having an inner opening (3211) and an outer opening (3212);
multiple abutting units (33) respectively mounted in the hoop recesses (321), each abutting unit (33) having
a first section protruding out from a corresponding inner opening of the hoop recesses (321) and abutting the outer surface of the seat post (20); and
a second section opposite to the first section, protruding into and abutting one of the concave sections (3132) of a corresponding abutting surface (313); and
multiple elastomers (34) respectively mounted in the outer openings of the hoop recesses (321) and respectively abutting the abutting units (33).

3. The longitudinally adjustable assembly for a bicycle seat as claimed in claim 2, wherein
the outer opening of each hoop recesses (321) has a concave section (3213) encompassing a corresponding elastomer (34) and having a bottom; and the hoop (32) has multiple positioning lumps (322) respectively radially protruding from the bottoms of the concave sections (3213) of the hoop recesses (321).

4. The longitudinally adjustable assembly for a bicycle seat as claimed in claim 3, wherein
the inner opening (3211) of each hoop recess (321) has a width;
the outer opening (3212) of each hoop recess (321) has a width larger than that of the inner opening (3211) of the hoop recess (321);
each abutting unit (33) is cylindrical and has a diameter larger than the width of the inner opening (3211) of a corresponding one of the hoop recesses (321); and
each elastomer (34) is C-shaped, surrounds a corresponding positioning lump (322) and has
two ends respectively abutting a corresponding abutting unit (33); and
a central segment abutting the corresponding positioning lump (322).

5. The longitudinally adjustable assembly for a bicycle seat as claimed in claim 3, wherein
the inner opening (3211) of each hoop recess (321) has a width;
the outer opening (3212) of each hoop recess (321) has a width larger than that of the inner opening (3211) of the hoop recess (321):
each abutting unit (33A) has
multiple balls (331A) arranged along a line, each ball (331A) having a diameter larger than the width of the inner opening (3211) of a corresponding one of the hoop recesses (321); and
each elastomer (34A) is hooped, surrounds a corresponding positioning lump (322) and abuts a corresponding abutting unit (33A).

6. The longitudinally adjustable assembly for a bicycle seat as claimed in claim 1, wherein the auxiliary hoop device (30C) is a unidirectional bearing.

7. The longitudinally adjustable assembly for a bicycle seat as claimed in claim 6, wherein the auxiliary hoop device (30C) comprises
a housing (31C) having
an inner surface; and
multiple abutting surfaces (313C) formed at the inner surface of the housing (31C) and inclining in a same rotational direction; each abutting surface (313C) having a side and a convex section (3132C) which is formed at the side;
a hoop (32C) having
multiple hoop recesses (321C) respectively formed radially though the hoop (32C) at intervals, each hoop recess (321C) having an inner side surface;
multiple elastomers (34C) respectively formed at and protruding from the inner side surfaces of the hoop recesses (321C); and
multiple abutting units (33C) respectively mounted in the hoop recesses (321C) and respectively pressed by the elastomers (34C).

8. The longitudinally adjustable assembly for a bicycle seat as claimed in one of claims 1 to 7, wherein
the tube connecting section (11) has multiple longitudinal grooves (111) at intervals formed in the inner surface of the seat tube (10);
the post connecting section (21) has
multiple protrusion recesses (211) at intervals formed in the outer surface of the seat post (20); and
multiple protrusions (212) respectively mounted securely in and protruding out from the protrusion recesses (211) and respectively slidably mounted in the longitudinal grooves (111).

9. The longitudinally adjustable assembly for a bicycle seat as claimed in one of claims 1 to 7, wherein the seat tube (10B) has a polygonal cross sectional shape; and the seat post (20B) has a polygonal cross sectional shape same as that of the seat tube (10B).
